# EUROPÄISCHE PATENTANMELDUNG

(11) **EP 1 300 283 A2**
(43) Veröffentlichungstag der Anmeldung: **09.04.2003**
(21) Anmeldenummer: 02021528.1
(22) Anmeldetag: 26.09.2002
(51) Int. Cl.: B60P 7/08

(54) **Lastöse für den Laderaum eines Kraftfahrzeuges**

(30) Priorität: 05.10.2001 DE 10149186
(71) Anmelder: Bayerische Motoren Werke Aktiengesellschaft, 80809 München (DE); BOS GmbH & Co. KG, 73760 Ostfildern (DE)
(72) Erfinder: Stöckl, Siegfried, 84076 Pfeffenhausen (DE); Schlecht, Werner P., 71665 Vaihingen (DE); Seeg, Thomas, 73760 Ostfildern (DE); Sparrer, Henning, 73274 Notzingen (DE)
(74) Vertreter: Günther, Hans Peter

(57) **Zusammenfassung**

Die vorliegende Erfindung betrifft ein Lastöse (1) für den Laderaum eines Kraftfahrzeuges, welche in eine schienenförmige Halterung (8) einbringbar und/oder verschieb- und arretierbar ist.

## Beschreibung

Die Erfindung betrifft eine Lastöse für den Laderaum eines Kraftfahrzeuges.

Derartige Lastösen sind allgemein bekannt und sind im Lade- bzw. Kofferraum eines PKW's starr befestigt. Die Funktion dieser Lastösen, welche auch als Verzurrösen bezeichnet werden und oftmals auch die Form eines Hakens aufweisen, besteht darin, in den Kofferraum zu packende Gegenstände mittels Gurten fest an den Lastösen zu verzurren, um hierdurch ein Verrutschen der Gegenstände während der Fahrt zu verhindern. Es hat sich nämlich in der Vergangenheit gezeigt, dass schwere im Kofferraum befindliche Gegenstände, wenn sie während der Fahrt verrutschen, zu einem anderen Fahrverhalten des PKW's führen, was sich insbesondere in Extremsituationen wie schneller Kurvenfahrt, zu einem Risikomoment auswachsen kann. Zusätzlich besteht die Gefahr, dass bei starken Bremsmanövern die im Kofferraum befindlichen Gegenstände wie "Geschosse" in Richtung Frontscheibe des Fahrzeuges fliegen und hierbei im PKW befindliche Personen verletzen können. All dies kann bei entsprechender Verzurrung der Gegenstände mittels Gurten an den Lastösen verhindert werden.

Es hat sich jedoch als nachteilig herauskristallisiert, dass die bekannten starr montierten Lastösen keine Anpassung hinsichtlich der Verzurrung an unterschiedliche Gegenstandsformen zulassen. Mit anderen Worten, in Abhängigkeit von der konkreten Form und des konkreten Gewichts der Gegenstände ist es oftmals nur schwerlich möglich, eine adäquate Verzurrung zu erzielen, um die o.g. negativen Aspekte der Gegenstände bei fehlender Verzurrung zu kompensieren.

Es ist daher Aufgabe der vorliegenden Erfindung, Lastösen für den Laderaum eines Kraftfahrzeugs zu schaffen, welche eine flexible Verzurrung bzw. Fixierung von Gegenständen im Laderaum eines Kraftfahrzeuges zu ermöglichen.

Die erfindungsgemäße Lastöse mit den Merkmalen des Anspruchs 1 hat den Vorteil, dass die Lastöse je nach Form des zu sichernden Gegenstandes an adäquater Stelle in eine schienenförmige Halterung einbringbar und/oder darin verschiebbar, sodann nach dem Auffinden des idealen Fixierungspunktes der schienenförmigen Halterung an dieser Stelle arretierbar ist, indem die Lastöse ein Sperrelement aufweist, das in entsprechende Bohrungen der schienenförmigen Halterung einrasten kann. Demgemäß kann für jeden zu sichernden Gegenstand der ideale Halterungspunkt für die Lastöse eingestellt werden, wodurch ein hoher Sicherheitsgrad für die mitfahrenden Personen im Kraftfahrzeug erzielt wird. Natürlich ist eine adäquate Verzurrung eines Gegenstandes im Laderaum eines Kraftfahrzeugs an den erfindungsgemäßen Lastösen auch insofern vorteilhaft, als eine Bruchgefahr des zu transportierenden Gegenstandes durch ein Herumpoltern im Laderaum, etwa bei Kurvenfahrt des Kraftfahrzeuges, verhindert wird. Schließlich ist dieses Zusammenwirken zwischen Bohrung und Sperrstift einerseits kostengünstig realisierbar und andererseits sehr zuverlässig und belastbar.

Durch die in den Unteransprüchen aufgeführten Merkmale sind vorteilhafte Weiterbildungen der im Anspruch 1 angegebenen Lastöse möglich.

Nach einer vorteilhaften Ausgestaltung ist die Lastöse im Wesentlichen kontinuierlich in der schienenförmigen Halterung verschieb- und arretierbar, sodass eine noch optimalere Einstellung der Lastöse an den bzw. die zu sichernden Gegenstände möglich ist.

Bevorzugt ist das Sperrelement als Sperrstift ausgebildet.

Vorteilhafterweise sind die Bohrungen in Form von Lochstreifen in die schienenförmige Halterung einbringbar, sodass beliebige Adaptionen an die jeweiligen Anforderungen hinsichtlich der Verstellbarkeit der Lastöse innerhalb der schienenförmigen Halterung erzielt werden können. Sollte also eine grobe Rasterung hinsichtlich der Bohrungen in den schienenförmigen Halterungen genügen, so können Lochstreifen eingesetzt werden, deren Bohrungen einen größeren Abstand voneinander aufweisen. Ist eine genauere Justierung bzw. Einstellbarkeit der Lastöse erforderlich, muss auf Lochstreifen mit größerer Bohrungsanzahl zurückgegriffen werden.

Um ein möglichst schnelles und gleichzeitig einfaches Verrasten der Sperrstifte in die Bohrungen der Lochstreifen innerhalb der schienenförmigen Halterung zu erzielen, ist der Sperrstift in seine Rastposition vorgespannt.

Da die Lastöse natürlich einerseits aus Kostengründen einfach und mit geringem zeitlichen Aufwand herstellbar und andererseits mit einem hohen Zuverlässigkeits- und Belastbarkeitsgrad ausgestaltet sein muss, weist die Lastöse einen Grundkörper und einen damit verbundenen Bügel auf, wobei der Grundkörper in der schienenförmigen Halterung geführt ist. Hierdurch besteht die Lastöse im Wesentlichen aus zwei Komponenten, die in einfacher Form herstellbar sind. Zudem hat sich die Verwendung von Bügeln auch schon bei den bekannten starr fixierten Lastösen bewährt. Auch besteht die Möglichkeit, unterschiedliche Bügelgrößen und -stärken mit dem Grundkörper zu kombinieren, um je nach Anwendungsfall die passende erfindungsgemäße Lastöse einsetzen zu können.

Gemäß einer bevorzugten Ausführungsform der Erfindung weist der Grundkörper einen Taster, insbesondere einen Wipptaster zur Betätigung des Sperrstifts auf. Derartige Taster sind in einfacher Form in den Grundkörper zu integrieren und bedingen eine direkte Umsetzung ihrer Betätigung in eine Bewegung des Sperrstiftes entweder in die Rastposition oder in die gelöste Position. Wipptaster stellen hierbei sicher, dass schon ihre jeweilige Stellung kennzeichnet, ob sich der Sperrstift in seiner Rastposition oder gelösten Position befindet.

Vorzugsweise ist der Grundkörper mit dem Sperrstift verbunden, sodass bei einem Herausnehmen der Lastöse aus der schienenförmigen Halterung nur ein Bauteil zu bedienen und handhaben ist.

Alternativ zu der reinen Befestigungsfunktion der erfindungsgemäßen Lastöse kann die Lastöse auch mit Zusatzteilen für Kraftfahrzeuge, insbesondere Stauboxen und Fahrradhalter, verbindbar oder einstückig ausbildbar sein. Dies hat den offensichtlichen Vorteil, dass die jeweiligen Zusatzteile wie Stauboxen und Fahrradhalter, sicher in die schienenförmige Halterung einbringbar, darin verschiebbar sowie anschließend arretierbar sind.

Gemäß einem alternativen Ausführungsbeispiel der Erfindung kann die schienenförmige Halterung aus einem inneren C-Profil sowie einem äußeren Profil bestehen, wodurch sich die Möglichkeit bietet, die Bohrungen für das Zusammenwirken mit dem Sperrelement direkt in das innere Profil einzustanzen, sodass das zusätzliche Vorsehen eines Lochstreifens entfällt. Weiterhin bedingt das äußere Profil die vorteilhafte Wirkung, dass die Seitenverkleidung mittels des äußeren Profils befestigbar ist sowie der Ladeboden darin aufgenommen werden kann. Folglich ergibt sich eine Vereinfachung der Befestigung der Seitenverkleidung im Laderaum eines Fahrzeuges sowie eine ansehnlichere Optik.

Natürlich kann die schienenförmige Halterung in Form von einer oder mehreren Schienen in den Laderaum und/oder in die Rückenlehne der

Rücksitze integriert werden. Dies bedingt zum einen eine weiterhin ebene Ladefläche, da in diesem Fall die schienenförmige Halterung nicht von der Grundfläche des Laderaumes vorsteht, und zum anderen wird auch der optische Eindruck des Laderaumes durch die Integration der schienenförmigen Halterung nicht beeinträchtigt.

Weitere Vorteile und Merkmale der vorliegenden Erfindung werden aus der nachfolgend detaillierten Beschreibung von Ausführungsbeispielen einer erfindungsgemäßen Lastöse im Zusammenhang mit den beigefügten Zeichnungen ersichtlich. Es zeigen:
- Fig. 1: eine perspektivische Explosionsansicht eines ersten Ausführungsbeispiels einer erfindungsgemäßen Lastöse mit zugehöriger Schiene,
- Fig. 2: eine Frontalansicht der in eine Schiene eingebrachten erfindungsgemäßen Lastöse von Fig. 1,
- Fig. 3: eine perspektivische Ansicht der erfindungsgemäßen Lastöse von Fig. 1, welche in eine Schiene eingebracht ist,
- Fig. 4: eine perspektivische Draufsicht auf die erfindungsgemäße Lastöse von Fig. 2,
- Fig. 5: eine perspektivische Ansicht eines zweiten Ausführungsbeispiels einer erfindungsgemäßen Lastöse, und
- Fig. 6: eine perspektivische Ansicht der Lastöse gemäß Fig. 5, welche in eine Schiene mit Doppelprofil eingebracht ist.

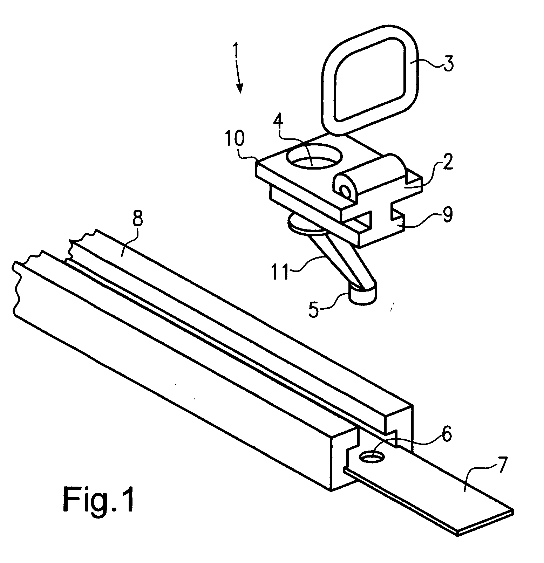

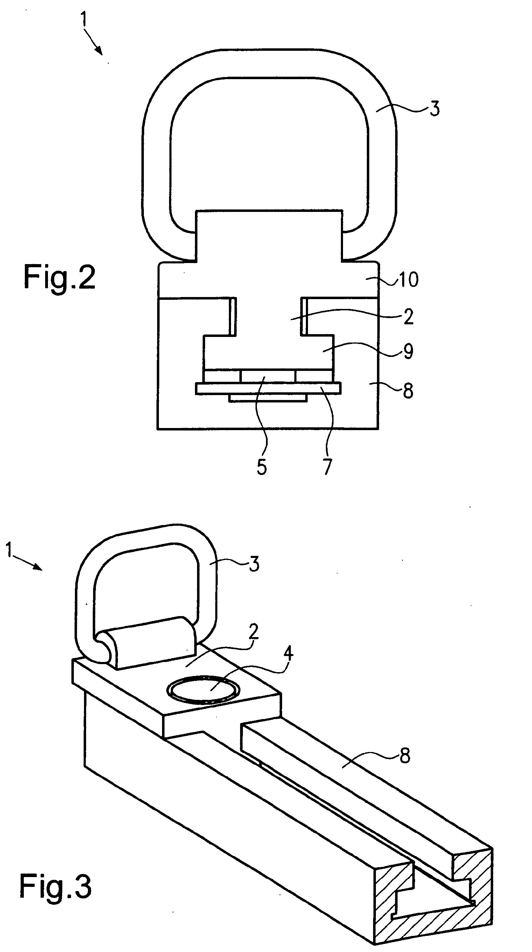

In Fig. 1 ist eine erfindungsgemäße Lastöse 1 in perspektivischer Explosionsansicht dargestellt. Die Lastöse 1 umfasst hierbei einen Grundkörper 2, an dem ein Stahlbügel 3 befestigt ist. In den Stahlbügel 3 greift zum Zwecke der Verzurrung von Gegenständen in Laderäumen von Kraftfahrzeugen etwa ein Gurt oder ein Seil ein. In der in Fig. 2 dargestellten Ansicht der erfindungsgemäßen Lastöse 1 ist der Stahlbügel 3 fest mit dem Grundkörper 2 verbunden. Alternativ kann der Stahlbügel 3 auch austauschbar mit dem Grundkörper 2 kombiniert werden. Natürlich kann auch der Stahlbügel 3 unterschiedliche Formen, je nach Einsatzform, aufweisen.

Zusätzlich zur Befestigung für den Stahlbügel 3 ist auf der Oberseite des Grundkörpers 2 in Fig. 1 eine Taste 4 vorgesehen, die mit einem an der Unterseite des Grundkörpers 2 befindlichen Sperrstift 5 verbunden ist. Das heißt, bei Betätigung der Taste 4 bewegt sich der Sperrstift 5 in Fig. 1 in Vertikalrichtung entweder in seine verrastete Position in eine Bohrung 6 eines Lochstreifens 7 innerhalb der Schiene 8 oder in eine gelöste Position, in welcher der Grundkörper 2 innerhalb der Schiene 8 verschiebbar ist.

Um diese Verschiebbarkeit des Grundkörpers 2 in der Schiene 8 zu erzielen, weist der Grundkörper 2, wie in Fig. 1 dargestellt, eine doppelte T-Form auf, wobei der untere Horizontalschenkel 9 innerhalb der Schiene 8, wie insbesondere aus Fig. 2 ersichtlich, geführt ist und der obere Horizontalschenkel 10 auf der Oberseite der Schiene 8 aufliegt.

Schließlich ist der Sperrstift 5 noch mit einem Lagerbolzen 11 ausgebildet, der eine adäquate Lagerung des Sperrstiftes in einer gelösten Position an der Unterseite des horizontalen Schenkels 9 bedingt.

In Fig. 2 ist die erfindungsgemäße Lastöse 1 im eingeführten Zustand in der Schiene 8 in Frontalansicht dargestellt. Fig. 2 ist hierbei insbesondere zu entnehmen, dass der Grundkörper 2 nebst Sperrstift 5 über dem Loch streifen verschiebbar geführt ist und, obgleich nicht dargestellt, in der verrasteten Position in eine Bohrung 6 eingreift.

Wie insbesondere auch Fig. 1 zu entnehmen ist, ist der Lochstreifen 7 in die Schiene 8 einführbar und kann somit auch ausgetauscht werden, um je nach Anforderungen, Lochschienen mit mehr oder weniger Bohrungen zu verwenden.

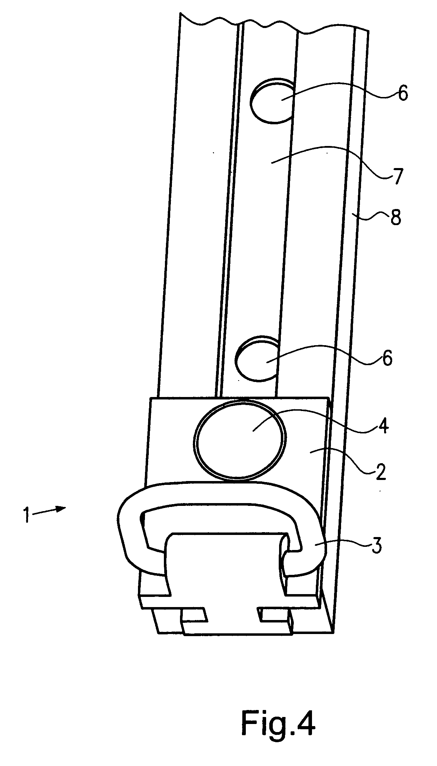

Schließlich zeigen Fig. 3 und 4 noch weitere Ansichten der erfindungsgemäßen Lastöse 1.

Obgleich nicht dargestellt, kann die Schiene 8 entweder direkt im Laderaum eines PKW's integriert werden oder aber auch nachträglich im Laderaum befestigt werden. Natürlich besteht die Möglichkeit, mehrere Schienen und mehrere Lastösen im Laderaum eines Kraftfahrzeuges einzusetzen. Neben der Grundfunktion der erfindungsgemäßen Lastöse 1 kann diese auch mit Zusatzteilen für Kraftfahrzeuge, insbesondere Stauboxen und Fahrradhalter, verbunden werden, um auch eine sichere Arretierung dieser Elemente im Laderaum sicherzustellen. Neben der Integration der Schienen 8 im Laderaum besteht natürlich auch die Möglichkeit, diese Schiene 8 an der dem Laderaum zugewandten Rückseite der Rücklehne zu integrieren, um auch hier erfindungsgemäße Lastösen einzusetzen.

Abschließend ist auch darauf hinzuweisen, dass natürlich mehrere Schienen in unterschiedlichen Ausrichtungen im Laderaum als auch der Rückseite der Rücklehne angebracht werden können. Neben der unterschiedlichen Gestaltung der Schiene können natürlich auch an Stelle der Taste 4 andere Betätigungsorgane, wie etwa Wippen oder dergleichen, eingesetzt werden. Auch hat es sich als vorteilhaft herauskristallisiert, wenn der Sperrstift 5 in seine Rastposition vorgespannt wird, um ein einfaches und schnelles verstellen der erfindungsgemäßen Lastöse 1 zu erzielen. Die Vorspannung des Sperrstiftes 5 in seine Rastposition bedingt nämlich, dass nach einem Lösen des Sperrstiftes 5 sowie anschließendem Verschieben des Grundkörpers 2 in der Schiene 8 der Raststift 5 unverzüglich bei erreichen der Zielposition des Grundkörpers 2 entlang der Schiene 8 in die nächstgelegene Bohrung 6 eingreift. Demgemäß ist keine weitere Betätigung des Sperrstiftes 5 durch die Taste 4 erforderlich.

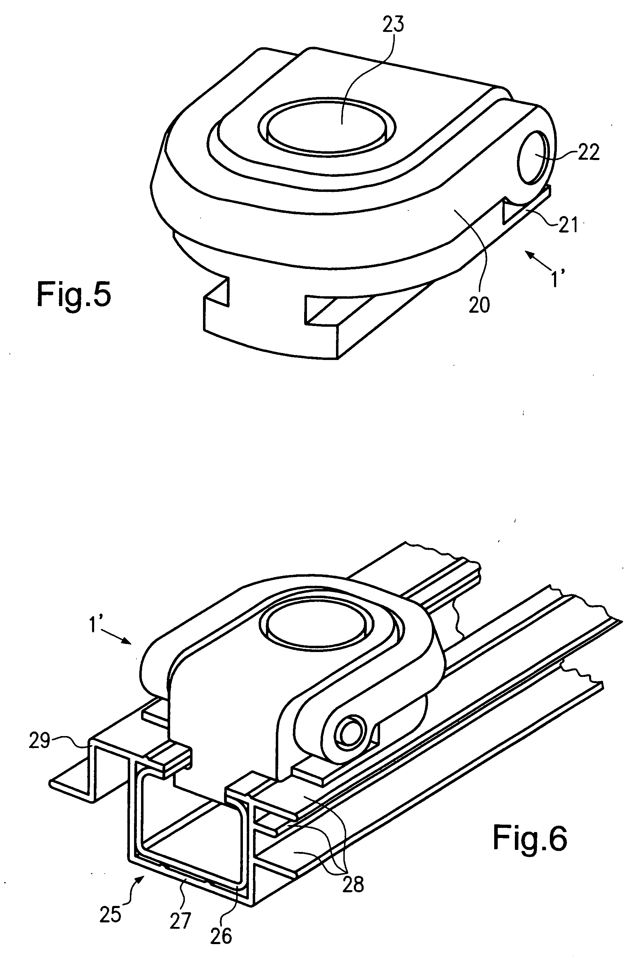

In Fig. 5 ist ein zweites Ausführungsbeispiel einer erfindungsgemäßen Lastöse 1' dargestellt. Bei dieser Lastöse 1' ist ein Bügel 20 um einen im Grundkörper 21 gelagerten Bolzen 22 schwenkbar gelagert. Der Grundkörper 21 weist hierbei eine ähnliche Form wie der Grundkörper 3 des ersten Ausführungsbeispieles der Lastöse 1 auf, jedoch wurden die über eine Schiene 25 überstehenden Kanten abgerundet, wie insbesondere den Fig. 5 und 6 entnehmbar ist. Zudem steht bei der erfindungsgemäßen Lastöse 1' im eingeschwenkten Zustand des Bügels 20 gemäß Fig. 5 die Taste 23 über den Bügel 20 hervor, sodass eine leichte Betätigung der Taste 23 auch bei schlechten Lichtverhältnissen möglich ist. Bezüglich der konkreten geometrischen Ausgestaltung der erfindungsgemäßen Lastöse 1' wird explizit auf die Fig. 5 Bezug genommen.

In Fig. 6 ist nunmehr eine Kombination der modifizierten Lastöse 1' mit modifizierter Schiene 25 in perspektivischer Ansicht dargestellt. Die in Bezug auf die Schiene 8 des ersten Ausführungsbeispieles der erfindungsgemäßen Lastöse 1 abgewandelte Schiene 25 des zweiten Ausführungsbeispiels der erfindungsgemäßen Lastöse 1' besteht aus zwei Profilen, nämlich einem inneren C-Profil 26 sowie einem äußeren Profil 27. Im Gegensatz zum ersten Ausführungsbeispiel sind die mit einem nicht dargestellten Sperrelement zusammenwirkenden (nicht dargestellten) Bohrungen direkt in das innere Profil 26 eingebracht, wohingegen beim ersten Ausführungsbeispiel, wie oben beschrieben, die Bohrungen 6 in einen Lochstreifen 7 eingearbeitet sind, der wiederum in die Schiene 8 eingeschoben wird. Diese Einarbeitung der Bohrungen direkt in das innere Profil 26 wird dadurch ermöglicht, dass sich zwischen den beiden Grundflächen sowie den jeweiligen Seitenflächen des inneren und äußeren Profils 26, 27 ein vorgegebener Abstand befindet, sodass ein Sperrelement der Lastöse 1' durch die Bohrungen im inneren Profil 26 hindurchtreten kann, ohne in Kontakt oder Eingriff mit dem äußeren Profil 27 zu gelangen.

Diese modifizierte Ausgestaltung der Schiene 25 ermöglicht natürlich auch, die Bohrungen nicht nur in die Grundfläche der inneren Schiene 26, sondern auch in die Seitenflächen, je nach Anwendungsfall, einzuarbeiten, gleichzeitig jedoch eine adäquate Funktionsweise zu erzielen.

Wie in Fig. 6 dargestellt, ist die äußere Schiene 27 an ihren beiden Außenseiten mit entsprechenden Zusatzelementen 28, 29 ausgebildet, die einerseits zur Aufnahme des Ladebodens und andererseits zur Befestigung der Seitenverkleidung des Laderaumes eines PKW's dienen. Alternativ zu den dargestellten Elementen 28, 29 der Fig. 6, können natürlich auch je nach Einsatz der erfindungsgemäßen Lastöse 1' mit modifizierter Schiene 25 anders gestaltete Zusatzelemente an der äußeren Schiene 26 vorgesehen werden.

Da die Funktionsweise der Lastöse 1' im Wesentlichen derjenigen der Lastöse 1 entspricht, wird diesbezüglich auf die vorhergehende Erläuterung in Verbindung mit der Lastöse 1 verwiesen. Natürlich besteht auch die Möglichkeit, den Grundkörper 2 mit zugeordneten Bauteilen in einer Schiene 25 sowie den Grundkörper 21 mit zugeordneten Bauteilen in einer Schiene 8 einzusetzen.

Schließlich ist noch darauf hinzuweisen, dass sowohl die Schiene 8, als auch die Schiene 25 mit Öffnungen versehen werden können, die einen Einsatz oder eine Entnahme der erfindungsgemäßen Verzurrösen 1, 1' ermöglichen. Ferner sind die Schienen 8, 25 mit geeigneten Schwächungen des Profilquerschnitts ausgestaltet, sodass im Falle eines Heckcrashes die Schienen ausknicken können und nicht zu einer Verletzung von im Fond sitzenden Personen führen.

Die vorhergehende Beschreibung des Ausführungsbeispieles gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Lastöse (1) für den Laderaum eines Kraftfahrzeuges, welche in einer schienenförmigen Halterung (8) einbringbar und/oder darin verschieb- und arretierbar ist, **dadurch gekennzeichnet, dass** die Lastöse (1) mit einem Sperrelement (5) ausgebildet ist, das in entsprechende Bohrungen (6) der schienenförmigen Halterung (8) einrasten kann.

2. Lastöse nach Anspruch 1, **dadurch gekennzeichnet, dass** die Lastöse (1) im Wesentlichen kontinuierlich in der schienenförmigen Halterung (8) verschieb- und arretierbar ist.

3. Lastöse nach Anspruch 1 oder 2, **dadurch gekennzeichnet, dass** das Sperrelement (5) als Sperrstift ausgebildet ist.

4. Lastöse nach einem der Ansprüche 1 bis 3, **dadurch gekennzeichnet, dass** die Bohrungen (6) in Form von Lochstreifen (7) in die schienenförmige Halterung (8) einbringbar sind.

5. Lastöse nach einem der Ansprüche 1 bis 4, **dadurch gekennzeichnet, dass** der Sperrstift (5) in seine Rastposition vorgespannt ist.

6. Lastöse nach einem der Ansprüche 1 bis 5, **dadurch gekennzeichnet, dass** die Lastöse (1) einen Grundkörper (2) und einen damit verbundenen Bügel (3) aufweist, wobei der Grundkörper (2) in der schienenförmigen Halterung (8) geführt ist.

7. Lastöse nach Anspruch 6, **dadurch gekennzeichnet, dass** der Grundkörper (2) einen Taster (4), insbesondere Wipptaster, zur Betätigung des Sperrstiftes (5) aufweist.

8. Lastöse nach Anspruch 6 oder 7, **dadurch gekennzeichnet, dass** der Grundkörper (2) mit dem Sperrstift (5) verbunden ist.

9. Lastöse nach einem der Ansprüche 1 bis 8, **dadurch gekennzeichnet, dass** die Lastöse (1) mit Zusatzteilen für Kraftfahrzeuge, insbesondere Stauboxen und Fahrradhalter, verbindbar oder einstückig ausbildbar ist.

10. Lastöse nach einem der Ansprüche 1 bis 9, **dadurch gekennzeichnet, dass** die schienenförmige Halterung (8) aus einem inneren C-Profil (26) sowie einem äußeren Profil (27) besteht.

11. Lastöse nach einem der Ansprüche 1 bis 10, **dadurch gekennzeichnet, dass** die schienenförmige Halterung (8) in Form einer oder mehreren Schienen in den Laderaum und/oder in die Rücklehne der Rücksitze integriert ist.
